# EUROPEAN PATENT APPLICATION

(11) **EP 4 539 405 A1**
(43) Date of publication of application: **16.04.2025**
(21) Application number: 22945364.2
(22) Date of filing: 10.06.2022
(51) Int. Cl.: H04L 27/00

(54) **METHOD AND APPARATUS FOR INDICATING TRANSMISSION CONFIGURATION INDICATION STATE**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/098275
(87) International publication number: WO 2023/236223

(57) **Abstract**

Disclosed in embodiments of the present invention is a method for indicating a transmission configuration indication (TCI) state, which can be applied to the technical field of communications. The method executed by a terminal device comprises: receiving first indication information sent by a network device, wherein the first indication information is used for indicating one or a pair of TCI states used for joint transmission. In this case, the terminal device can assume that all DMRS ports are quasi -co-located with an indicated first reference signal, thereby reliably realizing joint transmission based on multiple TRPs and improving the transmission performance of CJT based on multiple TRPs.

## Description

### TECHNICAL FIELD

The disclosure relates to the field of communication technology, and more particularly, to a method and an apparatus for indicating a transmission configuration indication state.

### BACKGROUND

Currently, in the discussion of Multiple-Input Multiple-Output (MIMO), multiple transmission reception points (TRP) may be used to achieve coherent joint transmission (CJT) in a case that there is ideal backhaul connections between the TRPs. Since the multiple TRPs may be located at different locations, propagation distances and directions of the multiple TRPs to a terminal may be different from each other, so that transmission parameters of the multiple TRPs on the terminal side may be different. Currently, how to indicate a transmission configuration indication (TCI) state for the CJT of the multiple TRPs is an issue that needs to be solved urgently.

### SUMMARY

Embodiments of the present disclosure provide a method and apparatus for indicating a transmission configuration indication state.

A first aspect of embodiments of the present disclosure provides a method for indicating a transmission configuration indication state, performed by a terminal. The method includes: receiving first indication information sent by a network device, in which the first indication information is configured to indicate one transmission configuration indication (TCI) state or a pair of TCI states for joint transmission.

In the present disclosure, the terminal can receive the one TCI state or the pair of TCI states for joint transmission sent by the network device. In this way, the terminal can determine that all DMRS port are in a quasi co-location relationship with a reference signal indicated by the one TCI state or the pair of TCI states. Thereby, joint transmission based on multiple TRPs can be reliably realized, and the transmission performance of CJT based on multiple TRPs is improved.

A second aspect of embodiments of the present disclosure provides a method for indicating a transmission configuration indication state, performed by a network device, and the method includes: sending first indication information to a terminal, in which the first indication information is configured to indicate one transmission configuration indication (TCI) state or a pair of TCI states for joint transmission.

In the present disclosure, the network device can send the one TCI state or the pair of TCI states for joint transmission to the terminal. In this way, the terminal can determine that all DMRS port are in a quasi co-location relationship with a reference signal indicated by the one TCI state or the pair of TCI states. Thereby, joint transmission based on multiple TRPs can be reliably realized, and the transmission performance of CJT based on multiple TRPs is improved.

A third aspect of embodiments of the present disclosure provides a communication device, applied to a terminal, and includes:
a transceiver module, configured to receive first indication information sent by a network device, in which the first indication information is configured to indicate one transmission configuration indication (TCI) state or a pair of TCI states for joint transmission.

A fourth aspect of embodiments of the present disclosure provides a communication device, applied to a network device, and includes:
a transceiver unit, configured to send first indication information to a terminal, in which the first indication information is configured to indicate one transmission configuration indication (TCI) state or a pair of TCI states for joint transmission.

A fifth aspect of embodiments of the present disclosure provides a communication device. The communication device includes: a processor and a memory for storing a computer program. The processor is configured to execute the computer program stored in the memory, so that the communication device performs the method according to the first aspect.

A sixth aspect of embodiments of the present disclosure provides a communication device. The communication device includes: a processor and a memory for storing a computer program. The processor is configured to execute the computer program stored in the memory, so that the communication device performs the method according to the second aspect.

A seventh aspect of embodiments of the present disclosure provides a communication device. The communication device includes a processor and an interface circuit. The interface circuit is configured to receive code instructions and transmit the code instructions to the processor; and the processor is configured to run the code instructions to perform the method according to the first aspect.

An eighth aspect of embodiments of the present disclosure provides a communication device. The communication device includes a processor and an interface circuit. The interface circuit is configured to receive code instructions and transmit the code instructions to the processor; and the processor is configured to run the code instructions to perform the method according to the second aspect.

A ninth aspect of embodiments of the present disclosure provides a system for indicating a transmission configuration indication state. The system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect.

A tenth aspect of embodiments of the present disclosure provides a computer-readable storage medium for storing instructions used by a terminal. When the instructions are executed, the terminal is caused to perform the method according to the first aspect.

An eleventh aspect of embodiments of the present disclosure provides a computer-readable storage medium for storing instructions used by a network device. When the instructions are executed, the network device is caused to perform the method according to the second aspect.

A twelfth aspect of embodiments of the present disclosure provides a computer program product including a computer program that, when run on a computer, causes the computer to perform the method according to the first aspect.

A thirteenth aspect of embodiments of the present disclosure provides a computer program product including a computer program that, when run on a computer, causes the computer to perform the method according to the second aspect.

A fourteenth aspect of embodiments of the present disclosure provides a chip system, including at least one processor and an interface, for supporting a terminal to implement the functions involved in the first aspect, for example, determining or processing at least one of data or information involved in the above methods. In a possible design, the chip system further includes a memory for storing necessary computer programs and data for the terminal. The chip system may be composed of chips, or may include chips and other discrete devices.

A fifteenth aspect of embodiments of the present disclosure provides a chip system, including at least one processor and an interface, for supporting a network device to implement the functions involved in the first aspect, for example, determining or processing at least one of data or information involved in the above methods. In a possible design, the chip system further includes a memory for storing necessary computer programs and data for the terminal. The chip system may be composed of chips, or may include chips and other discrete devices.

A sixteenth aspect of embodiments of the present disclosure provides a computer program that, when run on a computer, causes the computer to perform the method according to the first aspect.

A seventeenth aspect of embodiments of the present disclosure provides a computer program that, when run on a computer, causes the computer to perform the method according to the first aspect.

### BRIEF DESCRIPTION OF THE DRAWINGS

In order to clearly illustrate the technical solutions in embodiments of the disclosure or the background technology, a description will be made below to accompanying drawings used in the embodiments of the disclosure or the background technology.
FIG. 1 is a structure schematic diagram illustrating a communication system provided by an embodiment of the present disclosure.
FIG. 2 is a flow chart of a method for indicating a transmission configuration indication state provided by an embodiment of the present disclosure.
FIG. 3 is a flow chart of a method for indicating a transmission configuration indication state provided by an embodiment of the present disclosure.
FIG. 4 is a flow chart of a method for indicating a transmission configuration indication state provided by an embodiment of the present disclosure.
FIG. 5 is a flow chart of a method for indicating a transmission configuration indication state provided by an embodiment of the present disclosure.
FIG. 6 is a flow chart of a method for indicating a transmission configuration indication state provided by an embodiment of the present disclosure.
FIG. 7 is a flow chart of a method for indicating a transmission configuration indication state provided by an embodiment of the present disclosure.
FIG. 8 is a flow chart of a method for indicating a transmission configuration indication state provided by an embodiment of the present disclosure.
FIG. 9 is a flow chart of a method for indicating a transmission configuration indication state provided by an embodiment of the present disclosure.
FIG. 10 is a block diagram of a communication device provided by an embodiment of the present disclosure.
FIG. 11 is a block diagram of a communication device provided by an embodiment of the present disclosure.
FIG. 12 is a block diagram of a chip provided by an embodiment of the present disclosure.

### DETAILED DESCRIPTION

For ease of understanding, terminologies involved in the present disclosure are first introduced.

### 1. Transmission configuration indication (TCI)

It is used to inform a terminal which synchronization signal block (SSB) or channel state information reference signal (CSI-RS) sent by a network device is in a quasi co-location relationship with a demodulation reference signal corresponding to a physical downlink control channel (PDCCH) or a physical downlink shared channel (PDSCH); or inform the terminal which reference signal (such as a sounding reference signal (SRS)) sent by the terminal or which SSB or CSI-RS sent by a base station is in a quasi co-location relationship with the demodulation reference signal corresponding to a physical uplink control channel (PUCCH), a physical uplink shared channel (PUSCH). The quasi co-location includes one of the following transmission parameters: an average delay, a delay spread, a Doppler shift, a Doppler spread, and a spatial reception parameter.

### 2. Transmission and reception point (TRP)

The TRP is equivalent to a traditional base station, but in some cases, a cell may be covered by more than one TRP, and jointly covered by multiple TRPs.

### 3. Coherent joint transmission (CJT)

The CJT refers to a joint transmission through multiple transmission points, such as TRPs, to improve the overall signal at the terminal.

### 4. Downlink control information (DCI)

Downlink control information carried by a physical downlink control channel (PDCCH) and sent by a network device to a terminal, includes uplink and downlink resource allocation, Hybrid Automatic Repeat reQuest (HARQ) information, and power control, etc.

### 5. Reference signal (RS)

The reference signal is a "pilot" signal, which is a known signal provided by a transmitter to a receiver for channel estimation or channel detection. It can be used for coherent detection and demodulation, beam measurement, or channel state information measurement of a terminal or coherent detection and monitoring, or channel quality measurement of a network device.

### 6. Quasi co-location (QCL)

The QCL is a channel state assumption. If there is a QCL relationship between a Demodulation Reference Signal (DMRS) port of a certain channel and a reference signal, a transmission parameter of the DMRS port of the certain channel is the same as a transmission parameter corresponding to the reference signal. The transmission parameter includes at least one of the following: an average delay, a delay spread, a Doppler shift, a Doppler spread, or a spatial reception parameter.

In order to better understand the method for indicating a transmission configuration indication stat according to embodiments of the present disclosure, a communication system to which embodiments of the present disclosure are applied is first described below.

### 7. Demodulation Reference Signal (DMRS)

When a network device schedules data, such as physical downlink shared channel (PDSCH) data, it may indicate a corresponding DMRS port, including a number of DMRS ports and a DMRS port identifier. DMRS ports corresponding to different DMRS port identifiers are orthogonal. The number of DMRS ports is equal to a number of transmission layers of the PDSCH data. If different terminals occupy the same time-frequency resources to receive the PDSCH data, the network device may allocate different DMRS port identifiers to ensure that DMRS orthogonality.

Currently, a front loaded DMRS is divided into two types, and length of an orthogonal frequency division multiplexing (OFDM) symbol occupied by the front loaded DMRS can be 1 or 2. The front loaded DMRS occupies a beginning location of the PDSCH. For the type 1, when a number of symbols is 2, DMRS ports 0, 1, 4, and 5 are code division multiplexing (CDM) group 1, and DMRS ports 2, 3, 6, and 7 are CDM group 2. When the number of symbols is 1, DMRS ports 0 and 1 are CDM group 1, and DMRS ports 2 and 3 are CDM group 2. A DMRS of type 1 supports a maximum of 8 layers of transmission. For example, terminal 1 uses 4 layers for pairing and terminal 2 uses 4 layer 4s pairing, or terminal 1 to terminal 8 each uses one layer for pairing. For type 2, when the number of symbols is 2, DMRS ports 0, 1, 6, and 7 are CDM group 1, DMRS ports 2, 3, 8, and 9 are CDM group 2, and DMRS ports 4, 5, 10, and 11 are CDM Group 3. When the number of symbols is 1, DMRS ports 0 and 1 are CDM group 1, DMRS ports 2 and 3 are CDM group 2, and DMRS ports 4 and 5 are CDM group 3. A DMRS of type 2 supports a maximum of 12 layers of transmission. An additional DMRS means repeating the front loaded DMRS in subsequent symbols, and a CDM group of the additional DMRS is the same as that of the front loaded DMRS.

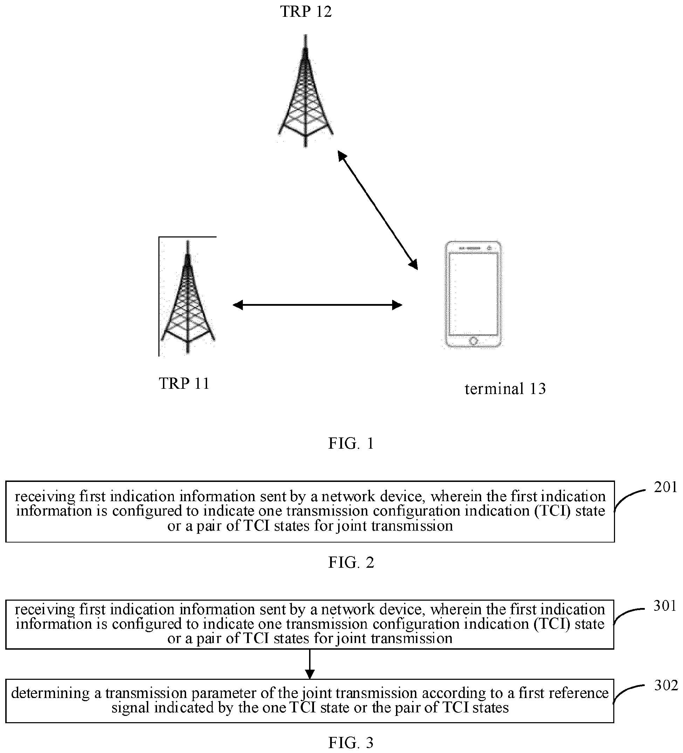

With reference to FIG. 1, FIG. 1 is a structure schematic diagram illustrating a communication system provided by an embodiment of the present disclosure. The communication system may include but is not limited to a network device, such as a TRP, and a terminal. The number and form of devices shown in FIG. 1 are only for examples and do not constitute a limitation on the embodiment of the present disclosure. In actual applications, it may include two or more network devices, and two or more terminals. The communication system shown in FIG. 1 includes two TRPs, i.e., TRP 11 and TRP 12, and one terminal 13 as an example.

It should be noted that the technical solutions of the embodiments of the present disclosure can be applied to various communication systems, such as a long term evolution (LTE) system, a fifth generation (5th generation, 5G) mobile communication system, a 5G new radio (NR) system, or other future new mobile communication systems.

TRP11 and TRP12 in embodiments of the present disclosure are entities on a network side that are used to transmit or receive signals. For example, they can be respectively evolved base stations (evolved NodeB, eNB), transmission reception points (TRP), next generation base stations (next generation NodeB, gNB) in an NR system, base stations in other future mobile communication systems, or wireless access nodes in wireless networking (Wi-Fi^{™}) systems, etc. The embodiments of the present disclosure do not limit the specific technologies and specific device forms used by the network device. The network device provided by the embodiments of the present disclosure may be composed of a centralized unit (CU) and distributed units (DU). The CU may also be called a control unit (control unit). By using the CU-DU structure, the protocol layers of the network device, such as the base station, can be separated, with some protocol layer functions placed on the CU for centralized control, and part of or all of the remaining protocol layer functions distributed in the DUs, and the CU centrally controls the DUs.

The terminal 13 in the embodiments of the present disclosure is an entity on a user side for receiving or transmitting signals, such as a mobile phone. The terminal may also be called a terminal device (terminal), user equipment (UE), a mobile station (MS), a mobile terminal device (mobile terminal, MT), etc. The terminal can be a car with communication functions, a smart car, a mobile phone, a wearable device, a tablet (Pad), a computer with a wireless transceiver function, a virtual reality (VR) terminal, an augmented reality ( augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form used by the terminal.

It can be understood that the communication system described in the embodiments of the present disclosure is to more clearly illustrate the technical solutions of the embodiments of the present disclosure, and does not constitute a limitation on the technical solutions provided by the embodiments of the present disclosure. As those skilled in the art may know, with the evolution of system architecture and the emergence of new service scenarios, the technical solutions provided by the embodiments of the present disclosure are also applicable to similar technical problems.

In the present disclosure, for the case of performing joint transmission by multiple TRPs, since locations of the multiple TRPs may be different, that is, propagation distances and directions of the multiple TRPs to the terminal may be different, thus, a method for indicating a transmission configuration indication (TCI) state is proposed for the case where the transmission parameters of the TRPs on the terminal side may be different. The network device indicates one TCI state or a pair of TCI states to the terminal, so that all DMRS ports of the terminal are in a quasi co-location relationship with a reference signal indicated by one TCI state or the pair of TCI states. Thereby the transmission performance of coherent joint transmission based on multiple TRPs is improved.

It should be noted that in the present disclosure, a method for indicating a transmission configuration indication state provided in any embodiment can be performed alone, or in combination with possible implementations in other embodiments, or in combination with any technical solution in the related art.

The embodiments of the present disclosure will now be further described with reference to the accompanying drawings and specific implementations.

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with embodiments of the present disclosure. Rather, they are merely examples of apparatus and methods consistent with aspects of the disclosure as detailed in the appended claims.

The terminology used in the embodiments of the present disclosure is for the purpose of describing particular embodiments only and is not intended to limit the embodiments of the present disclosure. As used in the embodiments of the present disclosure and the appended claims, the singular forms "a", "an" and "the" are intended to include the plural forms as well, unless the context clearly dictates otherwise. It will also be understood that the term "and/or" as used herein refers to and includes any and all possible combinations of one or more of the associated listed items.

Depending on the context, the words "if" and "in response to" as used herein may be interpreted as "when" or "while" or "in response to determining."

Embodiments of the present disclosure are described in detail below, examples of which are illustrated in the accompanying drawings, wherein the same or similar reference numerals refer to the same or similar elements throughout. The embodiments described below with reference to the accompanying drawings are exemplary and intended to explain the present disclosure, and are not to be construed as limitations of the present disclosure.

With reference to FIG. 2, FIG. 2 is a flowchart of a method for indicating a transmission configuration indication state provided by an embodiment of the present disclosure. The method is performed by a terminal. As shown in FIG. 2, the method may include but is not limited to the following steps.

Step 201, first indication information sent by a network device is received, the first indication information is configured to indicate one TCI state or a pair of TCI states for joint transmission.

Optionally, the joint transmission may be a coherent joint transmission (CJT) implemented by multiple TRPs.

Optionally, the first indication information may include a first medium access control (MAC) control element (CE). The first MAC CE is used to activate one TCI state or a pair of TCI states corresponding to a codepoint in a TCI field in downlink control information (DCI).

A TCI state can be a joint TCI state, a downlink (DL) TCI state, or an uplink (UL) TCI state. A pair of TCI states represents a DL TCI state and an UL TCI state.

Or, the first indication information may include a second MAC CE and downlink control information (DCI). The second MAC CE is used to activate one TCI state or a pair of TCI states corresponding to each of multiple code points of the TCI field in the DCI. The DCI is used to indicate one code point in the multiple code points.

That is, the network device can first activate the one TCI state or the pair of TCI states corresponding to multiple code points through the second MAC CE, and then one of the multiple code points is indicated through the DCI, so that the terminal can determine that all DMRS ports are in a quasi co-location relationship with a reference signal indicated by the one TCI state or the pair of TCI states corresponding to the indicated code point. Thereby, a transmission parameter for joint transmission can be determined based on a transmission parameter corresponding to the reference signal.

In the present disclosure, the terminal can receive the one TCI state or the pair of TCI states for joint transmission sent by the network device, and then determine that all DMRS ports are in a quasi co-location relationship with the reference signal indicated by the one TCI state or the pair of TCI states, so that the joint transmission based on multiple TRPs can be reliably realized, and the transmission performance of CJT based on multiple TRPs is improved.

With reference to FIG. 3, FIG. 3 is a flowchart of a method for indicating a transmission configuration indication state provided by an embodiment of the present disclosure. The method is performed by a terminal. As shown in FIG. 3, the method may include but is not limited to the following steps.

Step 301, first indication information sent by a network device is received, the first indication information is configured to indicate one TCI state or a pair of TCI states for joint transmission.

For the specific implementation of the above step 301, reference may be made to the detailed description of any embodiment of the present disclosure, and will not be described again here.

Step 302, a transmission parameter of the joint transmission is determined according to a first reference signal indicated by the one TCI state or the pair of TCI states.

Optionally, the first reference signal may be a channel state information reference signal (CSI-RS). The CSI-RS may be a CSI-RS configured as a tracking reference signal (TRS), or a CSI-RS configured with repetitions of repeated transmissions, or a CSI-RS that is not configured as a TRS or configured with a repetition. The terminal may determine the first reference signal according to a CSI-RS identifier in the one or more TCI states. A transmission parameter corresponding to each DMRS port, i.e., the transmission parameter for the joint transmission, can be determined based on the transmission parameter corresponding to the first reference signal.

Optionally, the transmission parameter includes at least one of: an average delay, a delay spread, a Doppler shift, a Doppler spread, and a spatial reception parameter (spatial Rx parameter).

The space reception parameter may be also called a quasi-co-location parameter of type D (QCL-TypeD).

A QCL type A includes the following transmission parameters: a Doppler shift, a Doppler spread, an average delay, a delay spread. A QCL type B includes the following transmission parameters: a Doppler shift, a Doppler spread. A QCL type C includes the following transmission parameters: a Doppler shift, an average delay. A QCL type D includes the following transmission parameter: a spatial Rx parameter.

Optionally, the terminal may determine a transmission parameter of a DMRS port of a physical downlink shared channel (PDSCH) according to a joint TCI state or a downlink TCI state in the one TCI state or the pair of TCI states.

That is to say, the terminal can assume that all DMRS ports of the PDSCH are in a quasi-co-location relationship with a downlink reference signal (DL RS) indicated by the TCI state.

Or, the terminal may determine a transmission parameter of a DMRS port of a physical uplink shared channel (PUSCH) based on a joint TCI state or an uplink TCI state in the one TCI state or the pair of TCI states.

That is to say, the terminal can assume that all DMRS ports of the PUSCH are in a quasi-co-location relationship with a DL RS or an UL RS indicated by the TCI state.

In the present disclosure, after the terminal receives the one TCI state or the pair of TCI states for joint transmission sent by the network device, it can determine the transmission parameter of the joint transmission according to the reference signal indicated by the one TCI state or the pair of TCI states, to determine that all DMRS ports are in a quasi-co-location relationship with the reference signal indicated by the one TCI state or the pair of TCI states. Thereby, coherent joint transmission based on multiple TRPs is reliably realized, and the transmission performance of CJT based on multiple TRPs is improved.

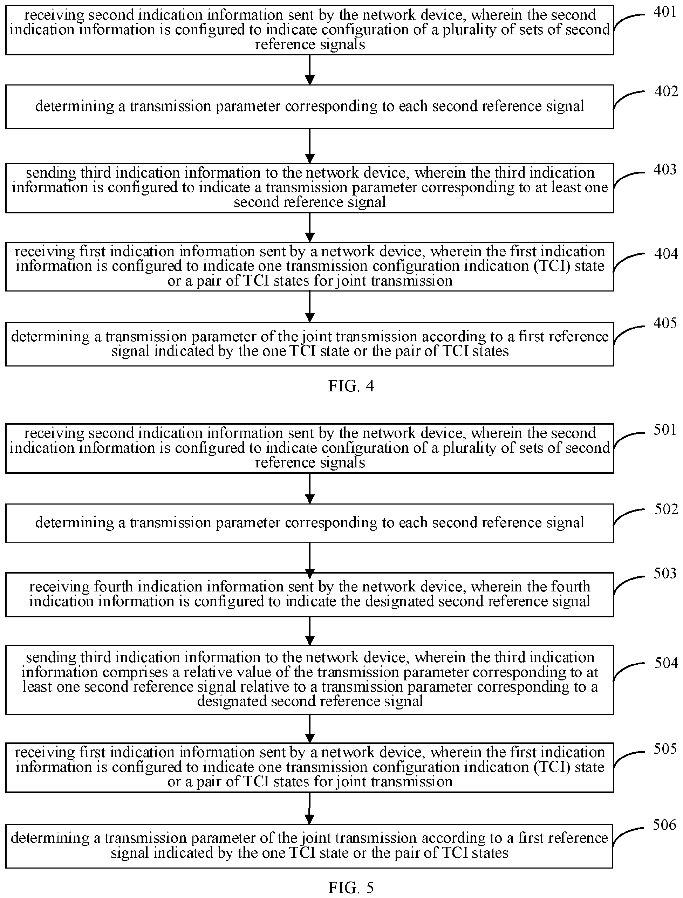

With reference to FIG. 4, FIG. 4 is a flowchart of a method for indicating a transmission configuration indication state provided by an embodiment of the present disclosure. The method is performed by a terminal. As shown in FIG. 4, the method may include but is not limited to the following steps.

Step 401, second indication information sent by a network device is received, the second indication information is configured to indicate configuration of a plurality of sets of second reference signals.

In the present disclosure, DMRS ports of transmission channels of all TRPs uses the same transmission parameter, thus the network device may compensate for a transmission parameter, such as compensating for at least one of an average delay, a delay spread, a Doppler shift, or a Doppler spread. Therefore, the network device may first indicate the configuration of the second reference signals to the terminal device. Then, the terminal device can determine a transmission parameter corresponding to each second reference signal based on the configuration of each second reference signal, and sends the determined transmission parameters to the network device.

Optionally, configuration of each set of second reference signals can include CSI-RSs configured as TRSs.

In the disclosure, the network device can send the configuration of multiple sets of CSI-RSs configured as TRSs to the terminal for multiple TRPs. Configuration of each set of CSI-RSs corresponds to one TRP, that is, one TRS corresponds to one TRP.

The terminal can perform measurement based on the configuration of each set of second reference signals to determine the transmission parameter corresponding to each second reference signal, for example, determine at least one of an average delay, a delay spread, a Doppler shift, a Doppler spread corresponding to each second reference signal.

Step 402, a transmission parameter corresponding to each second reference signal is determined.

In the disclosure, after receiving the configuration of the multiple sets of second reference signals configured by the network device, the terminal can perform measurement based on the configuration of each set of second reference signals, to determine the transmission parameter corresponding to each second reference signal, for example, determine at least one of an average delay, a delay spread, a Doppler shift, a Doppler spread corresponding to each second reference signal.

Step 403, third indication information is sent to the network device, the third indication information is used to indicate a transmission parameter corresponding to at least one second reference signal.

Optionally, the third indication information may be indicated by a sounding reference signal (SRS). That is, the SRS is adjusted based on at least one transmission parameter and then sent. For example, a transmission delay of the SRS is set based on a value of an average delay of the second reference signal, and an impact of a Doppler parameter of the SRS is adjusted based on a value of at least one of a Doppler shift and a Doppler spread of the second reference signal before transmission.

Optionally, the third indication information may also be included in channel state information (CSI). Thus, the transmission parameter corresponding to at least one TRS is displayed and fed back to the network device. For example, the value of at least one of the average delay, delay spread, Doppler shift, or Doppler spread corresponding to the second reference signal is reported to the base station based on a CSI feedback framework. The CSI feedback framework includes reporting mechanisms such as a feedback precoding matrix indication (PMI), a rank indication (RI), a layer indication (LI), a channel quality indication (CQI), an L1 layer reference signal received power (RSRP), an L1 layer signal to interference and noise ratio (SINR), etc.

Optionally, the third indication information may include an absolute value of the transmission parameter corresponding to each second reference signal; or, the third indication information may include a relative value of the transmission parameter corresponding to at least one second reference signal relative to a transmission parameter corresponding to a designated second reference signal.

The designated second reference signal may be indicated by the network device to the terminal, or may be determined by the terminal and then reported to the network device. The disclosure does not limit this.

In the present disclosure, after the terminal sends the relative value of the transmission parameter corresponding to at least one second reference signal, or the absolute value of the transmission parameter corresponding to each second reference signal to the network device, the network device can determines the first reference signal corresponding to the transmission parameter for joint transmission that is to be indicated to the terminal according to the transmission parameter corresponding to each second reference signal.

Optionally, the network device may select a second reference signal based on at least one transmission parameter corresponding to each second reference signal, and determine the first reference signal in the TCI state to be indicated. For example, the network device may determine a second reference signal corresponding to a minimum average delay in the multiple second reference signals as a first reference signal or a signal in the first reference signal. Or, the network device may determine a second reference signal corresponding to minimum Doppler shift in the multiple second reference signals as the first reference signal or a signal in the first reference signal. The disclosure does not limit this.

In the present disclosure, the network device may determine the transmission parameter used by the terminal for joint transmission based on a relative relationship between the transmission parameters corresponding to the second reference signals. That is, the terminal may report the transmission parameter corresponding to the designated second reference signal, or may not report the transmission parameter corresponding to the designated second reference signal. The disclosure does not limit this.

Step 404, first indication information sent by the network device is received, the first indication information is used to indicate one TCI state or a pair of TCI states for joint transmission.

Step 405, a transmission parameter of the joint transmission is determined according to a first reference signal indicated by the one TCI state or the pair of TCI states.

For the specific implementation of the above steps 404 and 405, reference may be made to the detailed description of any embodiment of the present disclosure, and will not be described again here.

In the present disclosure, after receiving the transmission parameter corresponding to at least one second reference signal reported by the terminal, the network device can indicate a transmission parameter for joint transmission to the terminal through the one TCI state or the pair of TCI states, so that the terminal can perform joint transmission based on the transmission parameter corresponding to the first reference signal indicated in the one TCI state or the pair of TCI states.

That is, the terminal can assume that all DMRS ports of a PDSCH are quasi-co-located with a DL RS indicated by the TCI state, and assume that all DMRS ports of a PUSCH are quasi-co-located with a DL RS or an UL RS indicated by the TCI state.

It should be noted that, a QCL indicated by the TCI state includes at least one of type A, B, C, and D. All of the reference signals indicated by the QCL types A, B, C, and D may be a CSI-RS configured as a TRS. A reference signal indicated by QCL Type D may be a CSI-RS configured with repetitions, or a CSI-RS that is not configured as a TRS nor configured with a repetition. That is, the first reference signal here may only include the second reference signal. For example, the first reference signal is a CSI-RS configured as a TRS, and the second reference signal is also a CSI-RS configured as a TRS. The first reference signal may also include two different reference signals. For example, the first reference signal includes a CSI-RS configured as a TRS (i.e., the second reference signal), and a CSI-RS configured with repetitions, or a CSI-RS that is not configured as TRS nor configured with a repetition.

In the present disclosure, the terminal first receives the configuration of the plurality of sets of second reference signals sent by the network device, determines the transmission parameter corresponding to each second reference signal according to the configuration of each set of second reference signals, and then reports the transmission parameter corresponding to the at least one second reference signal to the base station. After receiving the one TCI state or the pair of TCI states for the joint transmission sent by the network device, the terminal may determine the transmission parameter of the joint transmission according to the first reference signal indicated by the one TCI state or the pair of TCI states, to determine that all DMRS ports are in a quasi co-location relationship with the first reference signal indicated by the one TCI state or the pair of TCI states, thereby coherent joint transmission based on multiple TRPs is reliably realized, and the transmission performance of CJT based on multiple TRPs is improved.

With reference to FIG. 5, FIG. 5 is a flowchart of a method for indicating a transmission configuration indication state provided by an embodiment of the present disclosure. The method is performed by a terminal. As shown in FIG. 5, the method may include but is not limited to the following steps.

Step 501, second indication information sent by a network device is received, and the second indication information is configured to indicate configuration of a plurality of sets of second reference signals.

Step 502, a transmission parameter corresponding to each second reference signal is determined.

For the specific implementation of the above steps 501 and 502, reference may be made to the detailed description of any embodiment of the present disclosure, and will not be described again here.

Step 503, fourth indication information sent by the network device is received, the fourth indication information is used to indicate a designated second reference signal.

In the present disclosure, step 503 may also be performed before step 502. For example, step 503 and step 501 may be executed at the same time. The disclosure does not limit this.

Step 504, third indication information is sent to the network device, the third indication information includes a relative value of a transmission parameter corresponding to at least one second reference signal relative to a transmission parameter corresponding to the designated second reference signal.

In the disclosure, if the terminal receives the designated second reference signal indicated by the network device, when reporting the transmission parameter corresponding to the second reference signal, the terminal can report only the relative value of the transmission parameter corresponding to the remaining second reference signals relative to the transmission parameter corresponding to the designated second reference signal. Afterwards, the network device can determine a relationship between the transmission parameters corresponding to respective second reference signals, and then the terminal can determine the reference signal for the jointly transmission based on the corresponding transmission parameter.

Step 505, first indication information sent by the network device is received, the first indication information is used to indicate one TCI state or a pair of TCI states for joint transmission.

Step 506, a transmission parameter of the joint transmission is determined according to a first reference signal indicated by the one TCI state or the pair of TCI states.

For the specific implementation of the above steps 505 and 506, reference may be made to the detailed description of any embodiment of the present disclosure, and will not be described again here. In the disclosure, the terminal first receives the configuration of the plurality of sets of second reference signals sent by the network device, determines the transmission parameter corresponding to each second reference signal based on the configuration of each set of second reference signals, and reports the relative values of the transmission parameters corresponding to the remaining second reference signals relative to the transmission parameter corresponding to the designated second reference signal are reported to the base station. After receiving the one TCI state or the pair of TCI states for joint transmission sent by the network device, the transmission parameter of the joint transmission can be determined based on the first reference signal indicated by the one TCI state or the pair of TCI states, to determine that all DMRS ports are in a quasi co-location relationship with the first reference signal indicated by the one TCI state or the pair of TCI states, thereby coherent joint transmission based on multiple TRPs is reliably realized, and the transmission performance of CJT based on multiple TRPs is improved.

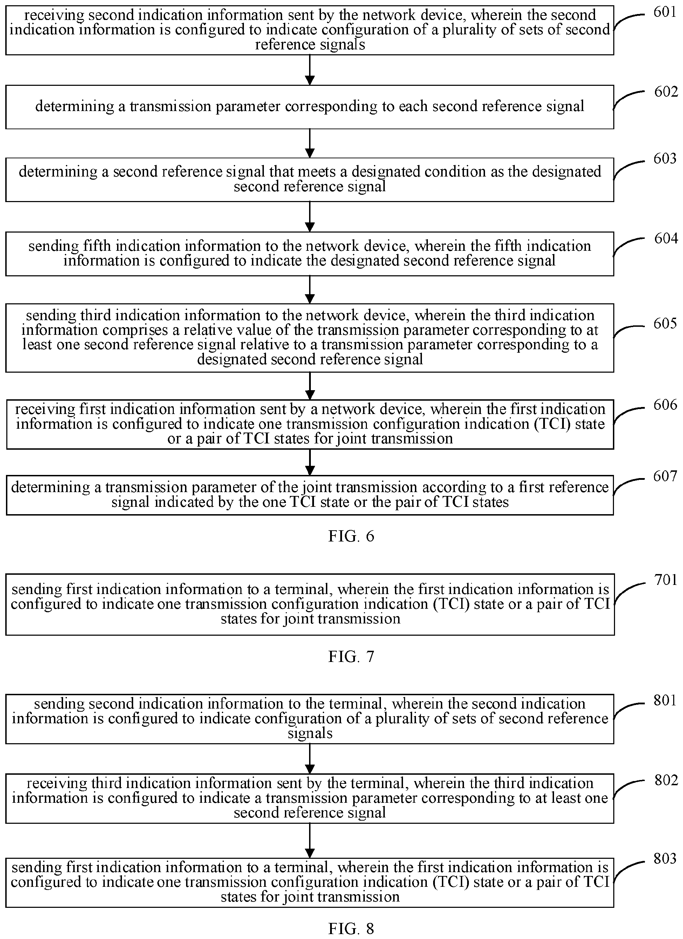

With reference to FIG. 6, FIG. 6 is a flowchart of a method for indicating a transmission configuration indication state provided by an embodiment of the present disclosure. The method is performed by a terminal. As shown in FIG. 6, the method may include but is not limited to the following steps.

Step 601, second indication information sent by a network device is received, the second indication information is configured to indicate configuration of a plurality of sets of second reference signals.

Step 602, a transmission parameter corresponding to each second reference signal is determined.

Step 603, a second reference signal that meets a designated condition is determined as the designated second reference signal.

Step 604, fifth indication information is sent to a network device, the fifth indication information is used to indicate the designated second reference signal.

Optionally, the terminal can determine the designated second reference signal based on a delay corresponding to each second reference signal.

For example, in response to a delay corresponding to a candidate second reference signal in multiple second reference signal being less than a delay corresponding to each of remaining second reference signals of the multiple second reference signal, it is determined that the candidate second reference signal meets the designated condition. The candidate second reference signal may be any one of the multiple second reference signals.

Or, if the multiple second reference signals are divided into different groups, the terminal can also determine a second reference signal in each group that meet designated condition, that is, determine a designated second reference signal in each group. For example, in response to a delay corresponding to a candidate second reference signal in any second reference signal group being less than a delay corresponding to each of remaining second reference signals in the any second reference signal group, it is determined that the candidate second reference signal in the any second reference signal group meets the designated condition. The candidate second reference signal may be any one in the any second reference signal group.

For example, there are a total of 4 TRS resources or 4 TRS resource sets, corresponding to 4 TRPs respectively. The 4 TRSs can be divided into 2 groups, the first TRS and the second TRS are the first group, and the third TRS and the fourth TRS are the second group. Therefore, the terminal can determine a designated reference signal in the first group and a designated reference signal in the second group. For example, if a delay corresponding to the first TRS in the first group is less than a delay corresponding to the second TRS, the first TRS can be determined to be the designated reference signal in the first group, so that when sending a transmission parameter to the network device, only a relative value of the transmission parameter corresponding to the second TRS relative to the transmission parameter corresponding to the first TRS is fed back. The method of feeding back a transmission parameter corresponding to a reference signal in the second group is similar to that of the first group and will not be described again here.

After the terminal determines the designated reference signal, it can send the identifier of the designated reference signal to the network device.

Step 605, third indication information is sent to the network device, the third indication information includes a relative value of a transmission parameter corresponding to at least one second reference signal relative to a transmission parameter corresponding to the designated second reference signal.

Optionally, step 605 and step 604 may be performed at the same time. For example, the third indication information and the fifth indication information are included in the same information, which is not limited in this disclosure.

Step 606, first indication information sent by the network device is received, the first indication information is used to indicate one TCI state or a pair of TCI states for joint transmission.

Step 607, a transmission parameter of the joint transmission is determined according to a first reference signal indicated by the one TCI state or the pair of TCI states.

For the specific implementation of the above steps 606 to 607, reference can be made to the detailed description of any embodiment of the present disclosure, and will not be described again here.

In the disclosure, the terminal first receives the configuration of the plurality of sets of second reference signals sent by the network device, then it can determine the transmission parameter corresponding to each second reference signal based on the configuration of each set of second reference signal. The candidate second reference signal that meets the designated condition is determined as the designated second reference signal. The terminal sends the relative values of the transmission parameters corresponding to the designated second reference signal and its remaining second reference signals relative to the transmission parameter corresponding to the designated second reference signal to the network device. After the terminal receives the one TCI state or the pair of TCI states for joint transmission sent by the network device, it can determine the transmission parameter of the joint transmission according to the first reference signal indicated by the one TCI state or the pair of TCI states, to determine that all DMRS ports are in a quasi-co-location relationship with the first reference signal indicated by the one TCI state or the pair of TCI states, thereby coherent joint transmission based on multiple TRPs is reliably realized, and the transmission performance of CJT based on multiple TRPs is improved.

With reference to FIG. 7, FIG. 7 is a flowchart of a method for indicating a transmission configuration indication state provided by an embodiment of the present disclosure. The method is performed by a network device. As shown in FIG. 7, the method may include but is not limited to the following steps.

Step 701, first indication information is sent to a terminal, the first indication information is used to indicate one TCI state or a pair of TCI states for joint transmission.

Optionally, the joint transmission may be a coherent joint transmission (CJT) implemented by multiple TRPs.

Optionally, the first indication information may include a first medium access control (MAC) control element (CE). The first MAC CE is used to activate one TCI state or a pair of TCI states corresponding to a codepoint in a TCI field in downlink control information (DCI), where the first MAC CE is used to activate the TCI domain in the DCI.

A TCI state can be a joint TCI state, a downlink (DL) TCI state, or an uplink (UL) TCI state. A pair of TCI states represents a DL TCI state and an UL TCI state.

Or, the first indication information may include a second MAC CE and downlink control information (DCI). The second MAC CE is used to activate one TCI state or a pair of TCI states corresponding to each of multiple code points of the TCI field in the DCI. The DCI is used to indicate one code point in the multiple code points.

That is, the network device can first activate the one TCI state or the pair of TCI states corresponding to multiple code points through the second MAC CE, and then one code point of the multiple code points is indicated through the DCI, so that the terminal can determine that all DMRS ports are in a quasi co-location relationship with a reference signal indicated by the one TCI state or the pair of TCI states corresponding to the one code point.

In the present disclosure, the network device may send the one TCI state or the pair of TCI states for joint transmission to the terminal. In this way, the terminal can determine that all DMRS ports are quasi-co-located with the first reference signal indicated by the one TCI state or the pair of TCI states, so that the joint transmission based on multiple TRPs can be reliably realized, and transmission performance of CJT based on multiple TRPs can be improved..

With reference to FIG. 8, FIG. 8 is a flowchart of a method for indicating a transmission configuration indication state provided by an embodiment of the present disclosure. The method is performed by a network device. As shown in FIG. 8, the method may include but is not limited to the following steps.

Step 801, second indication information is sent to a terminal, the second indication information is configured to indicate configuration of a plurality of sets of second reference signals.

In the present disclosure, DMRS ports of transmission channels of all TRPs uses the same transmission parameter, thus the network device may compensate for a transmission parameter, such as compensating for at least one of an average delay, a delay spread, a Doppler shift, or a Doppler spread. Therefore, the network device may first indicate the configuration of the second reference signals to the terminal device. Then, the terminal device can determine a transmission parameter corresponding to each second reference signal based on the configuration of each second reference signal, and sends the determined transmission parameters to the network device.

Optionally, configuration of each set of second reference signals can include CSI-RSs configured as TRSs.

In the disclosure, the network device can send the configuration of multiple sets of CSI-RSs configured as TRSs to the terminal for multiple TRPs. Configuration of each set of CSI-RSs corresponds to one TRP, that is, one TRS corresponds to one TRP.

The terminal can perform measurement based on the configuration of each set of second reference signals to determine the transmission parameter corresponding to each second reference signal, for example, determine at least one of an average delay, a delay spread, a Doppler shift, a Doppler spread corresponding to each second reference signal.

Step 802, third indication information sent by a terminal is received, the third indication information is used to indicate a transmission parameter corresponding to at least one second reference signal.

The second reference signal is the same or different from the first reference signal indicated by the TCI state. The type of the second reference signal may be the same or different from that of the first reference signal.

Optionally, the third indication information may be indicated by a sounding reference signal (SRS). That is, the SRS is adjusted based on at least one transmission parameter and then sent. For example, a transmission delay of the SRS is set based on a value of an average delay of the second reference signal, and an impact of a Doppler parameter of the SRS is adjusted based on a value of at least one of a Doppler shift and a Doppler spread of the second reference signal before transmission.

Optionally, the third indication information may also be included in channel state information (CSI). Thus, the transmission parameter corresponding to at least one TRS is displayed and fed back to the network device. For example, the value of at least one of the average delay, delay spread, Doppler shift, or Doppler spread corresponding to the second reference signal is reported to the base station based on a CSI feedback framework. The CSI feedback framework includes reporting mechanisms such as a feedback precoding matrix indication (PMI), a rank indication (RI), a layer indication (LI), a channel quality indication (CQI), an L1 layer reference signal received power (RSRP), an L1 layer signal to interference and noise ratio (SINR), etc.

Optionally, the third indication information may include an absolute value of the transmission parameter corresponding to each second reference signal; or, the third indication information may include a relative value of the transmission parameter corresponding to at least one second reference signal relative to a transmission parameter corresponding to a designated second reference signal.

The designated second reference signal may be indicated by the network device to the terminal, or may be determined by the terminal and then reported to the network device. The disclosure does not limit this.

In the present disclosure, the network device may determine the transmission parameter used by the terminal for joint transmission based on a relative relationship between the transmission parameters and corresponding second reference signals. That is, the terminal may report the transmission parameter corresponding to the designated second reference signal, or may not report the transmission parameter corresponding to the designated second reference signal. The disclosure does not limit this.

In the present disclosure, after the terminal sends the relative value of the transmission parameter corresponding to at least one second reference signal, or the absolute value of the transmission parameter corresponding to each second reference signal to the network device, the network device can determines the first reference signal corresponding to the transmission parameter for joint transmission that is to be indicated to the terminal according to the transmission parameter corresponding to each second reference signal.

Optionally, the network device may select a second reference signal based on at least one transmission parameter corresponding to each second reference signal, and determine the first reference signal in the TCI state to be indicated. For example, the network device may determine a second reference signal corresponding to a minimum average delay in the multiple second reference signals as a first reference signal or a signal in the first reference signal. Or, the network device may determine a second reference signal corresponding to minimum Doppler shift in the multiple second reference signals as the first reference signal or a signal in the first reference signal. The disclosure does not limit this.

Step 803, first indication information is sent to the terminal, the first indication information is used to indicate one TCI state or a pair of TCI states for joint transmission.

In the present disclosure, after receiving the transmission parameter corresponding to the at least one second reference signal sent by the terminal, the network device can determine a transmission parameter based on which the terminal can perform the joint transmission, and indicates a first reference signal corresponding to the transmission parameter to the terminal through the one TCI state or the pair of TCI states. Afterwards, the terminal can perform the joint transmission based on the transmission parameter corresponding to the first reference signal indicated in the TCI state sent by the network device.

That is, the terminal may assume that all DMRS ports of a PDSCH are quasi-co-located with a DL RS indicated by the TCI state, and that all DMRS ports of a PUSCH are quasi-co-located with a DL RS or an UL RS indicated by the TCI state.

It should be noted that, a QCL indicated by the TCI state includes at least one of type A, B, C, and D. All of the reference signals indicated by the QCL types A, B, C, and D may be a CSI-RS configured as a TRS. A reference signal indicated by QCL Type D may be a CSI-RS configured with repetitions, or a CSI-RS that is not configured as a TRS nor configured with a repetition. That is, the first reference signal here may only include the second reference signal. For example, the first reference signal is a CSI-RS configured as a TRS, and the second reference signal is also a CSI-RS configured as a TRS. The first reference signal may also include two different reference signals. For example, the first reference signal includes a CSI-RS configured as a TRS (i.e., the second reference signal), and a CSI-RS configured with repetitions or a CSI-RS that is not configured as TRS nor configured with a repetition.

In the present disclosure, the network device first sends the configuration of the plurality of sets of second reference signals to the terminal. After receiving the transmission parameter corresponding to at least one second reference signal sent by the terminal, the network device sends the one TCI state or the pair of TCI states for joint transmission to the terminal, to indicate the first reference signal. In this way, the terminal can determine the transmission parameter of the joint transmission according to the first reference signal indicated by the one TCI state or the pair of TCI states of each DMRS port in joint transmission, to determine that all DMRS ports are quasi-co-located with the first reference signal indicated by the one TCI state or the pair of TCI states. Thereby, coherent joint transmission based on multiple TRPs is reliably realized, and the transmission performance of CJT based on multiple TRPs is improved.

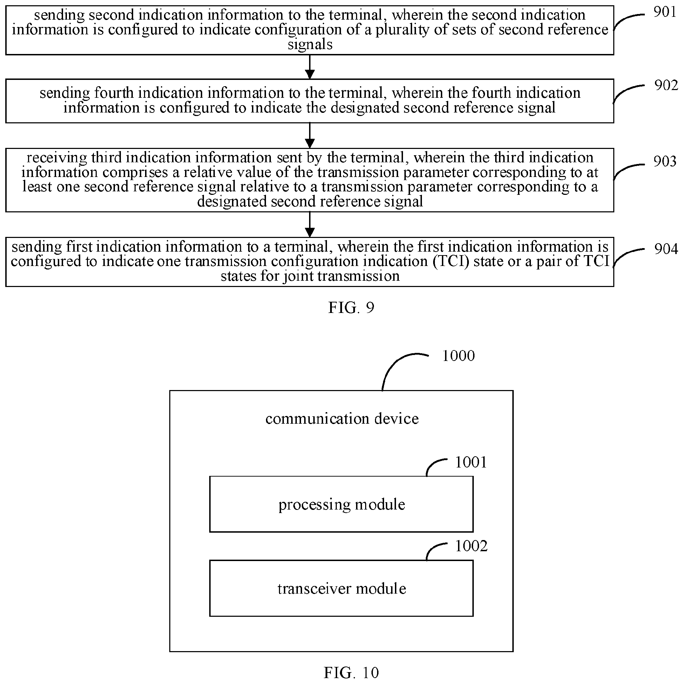

With reference to FIG. 9, FIG. 9 is a flowchart of a method for indicating a transmission configuration indication state provided by an embodiment of the present disclosure. The method is performed by a network device. As shown in FIG. 9, the method may include but is not limited to the following steps.

Step 901, second indication information is sent to a terminal, the second indication information is configured to indicate configuration of a plurality of sets of second reference signals.

For the specific implementation of the above step 901, reference may be made to the detailed description of any embodiment of the present disclosure, and will not be described again here.

Step 902, fourth indication information is sent to the terminal, the fourth indication information is used to indicate a designated second reference signal. Step 903, third indication information sent by the terminal is received, the third indication information includes a relative value of a transmission parameter corresponding to at least one second reference signal relative to a transmission parameter corresponding to the designated second reference signal.

For the specific implementation of the above step 903, reference may be made to the detailed description of any embodiment of the present disclosure, and will not be described again here.

In the present disclosure, the network device may determine the transmission parameters used by the terminal for joint transmission based on a relative relationship between the transmission parameters and the respective second reference signals. That is to say, the terminal may not report the transmission parameter corresponding to the designated second reference signal. Therefore, the network device can designate a second reference signal to the terminal as the designated second reference signal, and then the terminal can only report the relative value of the transmission parameter corresponding to the remaining second reference signals relative to the transmission parameter corresponding to the designated second reference signal.

Optionally, in the disclosure, the designated second reference signal may be determined by the terminal, and the terminal reports the determined designated second reference signal to the network device through indication information. That is, in a possible implementation of the present disclosure, the network device may receive fifth indication information sent by the terminal, and the fifth indication information is used for the designated second reference signal.

Step 904, first indication information is sent to the terminal, the first indication information is used to indicate one TCI state or a pair of TCI states for joint transmission.

In the present disclosure, the network device first sends the configuration of multiple sets of second reference signals to the terminal. After receiving the relative value of the transmission parameter corresponding to at least one second reference signals relative to the transmission parameter corresponding to the designated second reference signal sent by the terminal, the network device sends the one TCI state or the pair of TCI states for joint transmission to the terminal. In this way, the terminal can determine the transmission parameter for joint transmission according to the first reference signal indicated by the one TCI state or the pair of TCI states, to determine that all DMRS ports are in a quasi co-location relationship with the first reference signal indicated by the one TCI state or the pair of TCI states. Thereby, coherent joint transmission based on multiple TRPs is reliably realized, and the transmission performance of CJT based on multiple TRPs is improved.

FIG. 10 is a block diagram of a communication device 1000 provided by an embodiment of the present disclosure. The communication device 100 show in FIG. 10 includes a processing module 1001 and a transceiver module 1002.

It can be understood that the communication device 1000 may be a terminal, a device in the terminal, or a device that can be used in conjunction with the terminal. Alternatively, the communication device 1000 may be a network device, a device in a network device, or a device that can be used in conjunction with the network device.

Optionally, the communication device 1000 is on a terminal side, where:
the transceiver module 1002 is configured to receive first indication information sent by a network device, and the first indication information is configured to indicate one transmission configuration indication (TCI) state or a pair of TCI states for joint transmission

Optionally, the processing module 1001 is configured to determine a transmission parameter of the joint transmission according to a first reference signal indicated by the one TCI state or the pair of TCI states.

Optionally, the transmission parameter comprises at least one of:
an average delay, a delay spread, a Doppler shift, a Doppler spread, or a spatial reception parameter.

Optionally, the processing module 1001 is configured to:
determine a transmission parameter of a Demodulation Reference Signal (DMRS) port of a physical downlink shared channel (PDSCH) according to a first reference signal indicated by a joint TCI state or a downlink TCI state in the one TCI state or the one pair of TCI states; or
determine a transmission parameter of a DMRS port of a physical uplink shared channel (PUSCH) according to a first reference signal indicated by a joint TCI state or an uplink TCI state in the one TCI state or the pair of TCI states.

Optionally, the first indication information comprises a first media access control (MAC) control element (CE), wherein the first MAC CE is configured to activate one TCI state or a pair of TCI states corresponding to a code point in a TCI field in downlink control information (DCI).

Optionally, the first indication information comprises a second MAC CE and DCI, wherein the second MAC CE is configured to activate one TCI state or a pair of TCI states corresponding to each of multiple code points in a TCI field in the DCI, and the DCI is configured to indicate one code point in the multiple code points.

Optionally, the transceiver module 1002 is configured to receive second indication information sent by the network device, wherein the second indication information is configured to indicate configuration of a plurality of sets of second reference signals;
the processing module 1001 is configured to determine a transmission parameter corresponding to each second reference signal; and
the transceiver module 1002 is configured to send third indication information to the network device, wherein the third indication information is configured to indicate a transmission parameter corresponding to at least one second reference signal.

Optionally, the third indication information is indicated by a sounding reference signal (SRS), or the third indication information is included in channel state information (CSI).

Optionally, the third indication information comprises an absolute value of the transmission parameter corresponding to each second reference signal; or,
the third indication information comprises a relative value of the transmission parameter corresponding to at least one second reference signal relative to a transmission parameter corresponding to a designated second reference signal.

Optionally, the transceiver module 1002 is configured to receive fourth indication information sent by the network device, wherein the fourth indication information is configured to indicate the designated second reference signal.

Optionally, the processing module 1001 is configured to determine a second reference signal that meets a designated condition as the designated second reference signal; and
the transceiver module 1002 is configured to send fifth indication information to the network device, wherein the fifth indication information is configured to indicate the designated second reference signal.

Optionally, the processing module is configured to:
in response to a delay corresponding to a candidate second reference signal being less than a delay corresponding to each of remaining second reference signals, determine that the candidate second reference signal meets the designated condition; or,
in response to a delay corresponding to a candidate second reference signal in any second reference signal group being less than a delay corresponding to each of remaining second reference signals in the any second reference signal group, determine that the candidate second reference signal in the any reference signal group meets the designated condition.

In the present disclosure, the terminal may receive the one TCI state or the pair of TCI states for joint transmission sent by the network device, and then determine that all DMRS ports are in a quasi co-location relationship with the reference signal indicated by the one TCI state or the pair of TCI states, so that the joint transmission based on multiple TRPs can be reliably realized, which improves the transmission performance of CJT based on multiple TRPs.

Optionally, the communication device 1000 is on the network device side, where:
The transceiver module 1002 is configured to send first indication information to a terminal, wherein the first indication information is configured to indicate one TCI state or a pair of TCI states for joint transmission.

Optionally, the first indication information comprises a first media access control (MAC) control element (CE), wherein the first MAC CE is configured to activate one TCI state or a pair of TCI states corresponding to a code point in a TCI field in downlink control information (DCI).

Optionally, the first indication information comprises a second MAC CE and DCI, wherein the second MAC CE is configured to activate one TCI state or a pair of TCI states corresponding to each of multiple code points in a TCI field in the DCI, and the DCI is configured to indicate one code point in the multiple code points.

Optionally, the transceiver module 1002 is configured to:
send second indication information to the terminal, wherein the second indication information is configured to indicate configuration of a plurality of sets of second reference signals, and the second reference signals are the same as or different from a first reference signal indicated by the TCI state;
receive third indication information sent by the terminal, wherein the third indication information is configured to indicate a transmission parameter corresponding to at least one second reference signal.

Optionally, the third indication information is indicated by a sounding reference signal (SRS), or the third indication information is included in channel state information (CSI).

Optionally, the third indication information comprises an absolute value of the transmission parameter corresponding to each second reference signal; or,
the third indication information comprises a relative value of the transmission parameter corresponding to at least one second reference signal relative to a transmission parameter corresponding to a designated second reference signal.

Optionally, the transceiver module 1002 is configured to:
send fourth indication information to the terminal, wherein the fourth indication information is configured to indicate the designated second reference signal; or
receive fifth indication information sent by the terminal, wherein the fifth indication information is configured for the designated second reference signal.

In the present disclosure, the network device may send the one TCI state or the pair of TCI states for joint transmission to the terminal. In this way, the terminal can determine that all DMRS ports are in a quasi co-location relationship with the reference signal indicated by the one TCI state or the pair of TCI states, so that the j oint transmission based on multiple TRPs can be reliably realized, which improves the transmission performance of CJT based on multiple TRPs.

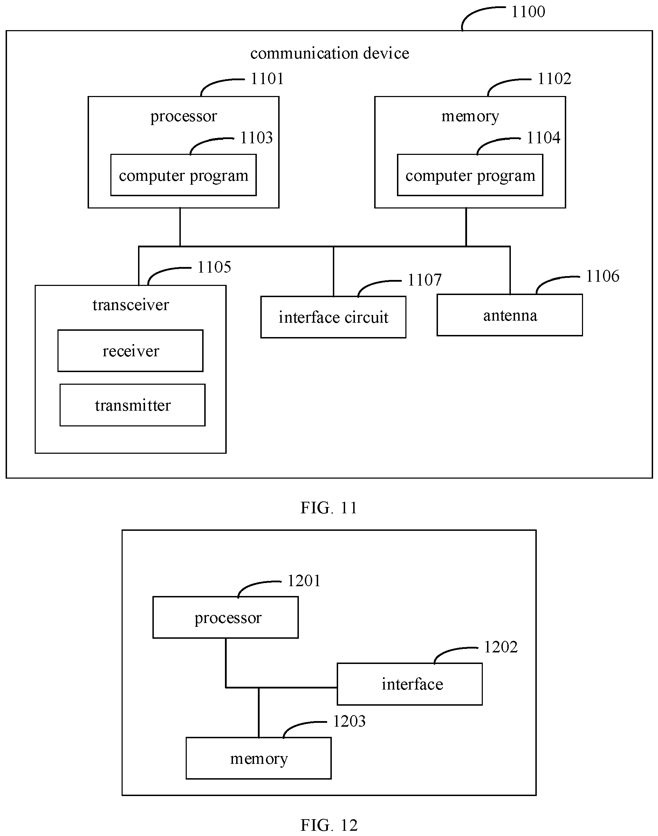

Referring to FIG. 11, FIG. 11 is a block diagram of a communication device 1100 provided by an embodiment of the present disclosure. The communication device 1100 can be a terminal, a network device, or can be a chip, a chip system, or a processor that supports the terminal to implement the above method, or can be a chip, a chip system, or a processor that supports the network device to implement the above method. The communication device can be used to implement the methods described in the above method embodiments, details of which may refer to the description in the above method embodiments.

The communication device 1100 may include one or more processors 1101. The processor 1101 may be a general-purpose processor or a dedicated processor, such as, a baseband processor or a central processor. The baseband processor may be used for processing communication protocols and communication data. The central processor may be used for controlling the communication device (e.g., a base station, a baseband chip, a terminal, a terminal chip, a distributed unit (DU), or a central unit (CU)), executing a computer program, and processing data of the computer program.

Optionally, the communication device 1100 may include one or more memories 1102 on which a computer program 1104 may be stored. The processor 1101 executes the computer program 1104 to cause the communication device 1100 to perform the methods described in the above method embodiments. Optionally, the memory 1102 may also store data. The communication device 1100 and the memory 1102 can be provided separately or integrated together.

Optionally, the communication device 1100 may also include a transceiver 1105 and an antenna 1106. The transceiver 1105 may be referred to as a transceiver unit, a transceiver machine, or a transceiver circuit, for realizing a transceiver function. The transceiver 1105 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 1100 may include one or more interface circuits 1107. The interface circuits 1107 are used to receive code instructions and transmit them to the processor 1101. The processor 1101 runs the code instructions to cause the communication device 1100 to perform the method described in the method embodiments.

The communication device 1100 is a terminal. The processor 1101 is used to perform the step 302 in FIG. 3, the step 402 and step 405 in FIG. 4, etc. The transceiver 1105 is used to perform the step 201 in FIG. 2, the step 301, step 303 and step 304 in FIG. 3, the step 401, step 402 in FIG. 4, etc.

The communication device 1100 is a network device. The transceiver 1105 is used to perform the step 701 in FIG. 7, the step 801, step 802 in FIG. 8, etc.

In an implementation, the processor 1101 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1101 may store a computer program 1103, and the computer program 1103 runs on the processor 1101, causing the communication device 1100 to perform the method described in the above method embodiments. The computer program 1103 may be solidified in the processor 1101, in which case the processor 1101 may be implemented by hardware.

In an implementation, the communication device 1100 may include circuits. The circuits may implement the sending, receiving or communicating functions in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver can also be produced using various IC process technologies, such as a complementary metal oxide semiconductor (CMOS), n Metal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a terminal or a network device, but the scope of the communication device described in the disclosure is not limited thereto, and the structure of the communication device may not be limited by FIG. 11. The communication device may be a stand-alone device or may be part of a larger device. For example, the communication device may be:
(1) a stand-alone integrated circuit (IC), a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, FIG. 12 which is structural diagram of the chip may be referred to. The chip shown in FIG. 12 includes a processor 1201 and an interface 1202. There may be one or more processors 1201, and there may be multiple interfaces 1202.

For a case where the chip is used to implement the functions of the terminal in the embodiments of the present disclosure:
the processor 1201 is used to perform step 302 in FIG. 3, or step 402 and step 405 in FIG. 4, etc.

Optionally, the chip further includes a memory 1203 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on a computer, processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any available medium to which the computer is capable to access or a data storage device such as a server, data center that contains one or more available mediums integrated. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of the embodiments of the disclosure, nor to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondence relationships shown in the various tables in the disclosure can be configured or predefined. The values of information in each table are only examples and can be configured to other values, which are not limited by the disclosure. When configuring the correspondence relationships between information and various parameters, it is not necessary to configure all the correspondence relationships shown in each table. For example, in the tables in the disclosure, some correspondence relationships shown in certain rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and algorithm steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, which is not elaborated herein.

The above are only detailed embodiments of the present disclosure, but the protection scope of the present disclosure is not limited thereto. Any skilled familiar with the technical field can easily think of changes or substitutions within the technical scope disclosed in the present disclosure, which should be covered by the protection scope of this disclosure. Therefore, the protection scope of the present disclosure should be subject to the protection scope of the claims.

## Claims

1. A method for indicating a transmission configuration indication state, performed by a terminal, comprising:
receiving first indication information sent by a network device, wherein the first indication information is configured to indicate one transmission configuration indication (TCI) state or a pair of TCI states for joint transmission.

2. The method of claim 1, further comprising:
determining a transmission parameter of the joint transmission according to a first reference signal indicated by the one TCI state or the pair of TCI states.

3. The method of claim 2, wherein the transmission parameter comprises at least one of:
an average delay, a delay spread, a Doppler shift, a Doppler spread, or a spatial reception parameter.

4. The method of claim 2, wherein determining the transmission parameter of the joint transmission according to the first reference signal indicated by the one TCI state or the pair of TCI states comprises:
determining a transmission parameter of a Demodulation Reference Signal (DMRS) port of a physical downlink shared channel (PDSCH) according to a first reference signal indicated by a joint TCI state or a downlink TCI state in the one TCI state or the pair of TCI states; or
determining a transmission parameter of a DMRS port of a physical uplink shared channel (PUSCH) according to a first reference signal indicated by a joint TCI state or an uplink TCI state in the one TCI state or the pair of TCI states.

5. The method of claim 1, wherein,
the first indication information comprises a first media access control (MAC) control element (CE), wherein the first MAC CE is configured to activate one TCI state or a pair of TCI states corresponding to a code point in a TCI field in downlink control information (DCI).

6. The method of claim 1, wherein,
the first indication information comprises a second MAC CE and DCI, wherein the second MAC CE is configured to activate one TCI state or a pair of TCI states corresponding to each of multiple code points in a TCI field in the DCI, and the DCI is configured to indicate one code point in the multiple code points.

7. The method of any one of claims 1 to 6, before receiving the first indication information sent by the network device, further comprising:
receiving second indication information sent by the network device, wherein the second indication information is configured to indicate configuration of a plurality of sets of second reference signals;
determining a transmission parameter corresponding to each second reference signal; and sending third indication information to the network device, wherein the third indication information is configured to indicate a transmission parameter corresponding to at least one second reference signal.

8. The method of claim 7, wherein the third indication information is indicated by a sounding reference signal (SRS), or the third indication information is included in channel state information (CSI).

9. The method of claim 7, wherein,
the third indication information comprises an absolute value of the transmission parameter corresponding to each second reference signal; or,
the third indication information comprises a relative value of the transmission parameter corresponding to at least one second reference signal relative to a transmission parameter corresponding to a designated second reference signal.

10. The method of claim 9, further comprising:
receiving fourth indication information sent by the network device, wherein the fourth indication information is configured to indicate the designated second reference signal.

11. The method of claim 9, further comprising:
determining a second reference signal that meets a designated condition as the designated second reference signal; and
sending fifth indication information to the network device, wherein the fifth indication information is configured to indicate the designated second reference signal.

12. The method of claim 11, further comprising:
in response to a delay corresponding to a candidate second reference signal being less than a delay corresponding to each of remaining second reference signals, determining that the candidate second reference signal meets the designated condition; or,
in response to a delay corresponding to a candidate second reference signal in any second reference signal group being less than a delay corresponding to each of remaining second reference signals in the any second reference signal group, determining that the candidate second reference signal in the any reference signal group meets the designated condition.

13. A method for indicating a transmission configuration indication state, performed by a network device, comprising:
sending first indication information to a terminal, wherein the first indication information is configured to indicate one transmission configuration indication (TCI) state or a pair of TCI states for joint transmission.

14. The method of claim 13, wherein,
the first indication information comprises a first media access control (MAC) control element (CE), wherein the first MAC CE is configured to activate one TCI state or a pair of TCI states corresponding to a code point in a TCI field in downlink control information (DCI).

15. The method of claim 13, wherein,
the first indication information comprises a second MAC CE and DCI, wherein the second MAC CE is configured to activate one TCI state or a pair of TCI states corresponding to each of multiple code points in a TCI field in the DCI, and the DCI is configured to indicate one code point in the multiple code points.

16. The method of any one of claims 13-15, before sending the first indication information to the terminal, further comprising:
sending second indication information to the terminal, wherein the second indication information is configured to indicate configuration of a plurality of sets of second reference signals, and the second reference signals are the same as or different from a first reference signal indicated by the TCI state; and
receiving third indication information sent by the terminal, wherein the third indication information is configured to indicate a transmission parameter corresponding to at least one second reference signal.

17. The method of claim 16, wherein the third indication information is indicated by a sounding reference signal (SRS), or the third indication information is included in channel state information (CSI).

18. The method of claim 16, wherein,
the third indication information comprises an absolute value of the transmission parameter corresponding to each second reference signal; or,
the third indication information comprises a relative value of the transmission parameter corresponding to at least one second reference signal relative to a transmission parameter corresponding to a designated second reference signal.

19. The method of claim 18, further comprising:
sending fourth indication information to the terminal, wherein the fourth indication information is configured to indicate the designated second reference signal; or,
receiving fifth indication information sent by the terminal, wherein the fifth indication information is configured for the designated second reference signal.

20. A communication device, applied on a terminal side, comprising:
a transceiver module, configured to receive first indication information sent by a network device, wherein the first indication information is configured to indicate one transmission configuration indication (TCI) state or a pair of TCI states for joint transmission.

21. A communication device, applied on a network device side, comprising:
a transceiver module, configured to send first indication information to a terminal, wherein the first indication information is configured to indicate one transmission configuration indication (TCI) state or a pair of TCI states for joint transmission.

22. A communication device, comprising a processor and a memory having a computer program stored therein, wherein the processor executes the computer program stored in the memory, to cause the communication device to perform the method of any one of claims 1 to 12, or the method of any one of claims 13 to 19.

23. A computer-readable storage medium for storing instructions, wherein when the instructions are executed, the method of any one of claims 1 to 12 is performed, or the method of any one of claims 13 to 19 is performed.
